# EUROPÄISCHE PATENTANMELDUNG

(11) **EP 3 029 357 A1**
(43) Veröffentlichungstag der Anmeldung: **08.06.2016**
(21) Anmeldenummer: 15197341.9
(22) Anmeldetag: 01.12.2015
(51) Int. Cl.: F16H 57/04, F04D 1/12, F02C 7/06, F02C 7/36

(54) **VORRICHTUNG MIT EINEM DREHFESTEN ERSTEN BAUTEIL UND EINEM ZUMINDEST BEREICHSWEISE MIT DEM ERSTEN BAUTEIL DREHBAR VERBUNDENEN ZWEITEN BAUTEIL**

(30) Priorität: 04.12.2014 DE 102014117841
(71) Anmelder: Rolls-Royce Deutschland Ltd & Co KG, 15827 Blankenfelde-Mahlow (DE)
(72) Erfinder: Venter, Gideon, 14165 Berlin (DE)
(74) Vertreter: Schmidt, Martin Michael

(57) **Zusammenfassung**

Es wird eine Vorrichtung (21) mit einem drehfesten ersten Bauteil (27) und einem zumindest bereichsweise mit dem ersten Bauteil (27) drehbar verbundenen zweiten Bauteil (28) beschrieben, wobei Hydraulikfluid über das erste Bauteil (27) und das zweite Bauteil (28) zu Schmierstellen führbar ist. Das zweite Bauteil (28) ist mit in im Wesentlichen unter einem definierten Winkel in radialer Richtung im zweiten Bauteil (28) verlaufenden Schaufelbereichen (47) ausgeführt, zwischen welchen Übertragungsbereiche (34) für Hydraulikfluid des zweiten Bauteiles (28) vorgesehen sind, deren Strömungsquerschnitte sich in Strömungsrichtung des Hydraulikfluides in den Übertragungsbereichen (34) verringern.

## Beschreibung

Die Erfindung betrifft eine Vorrichtung mit einem drehfesten ersten Bauteil und einem zumindest bereichsweise mit dem ersten Bauteil drehbar verbundenen zweiten Bauteil gemäß der im Oberbegriff des Patentanspruchs 1 näher definierten Art.

Bei aus der Praxis bekannten Vorrichtungen, die mit einem drehfesten ersten Bauteil und einem zumindest bereichsweise mit dem ersten Bauteil drehbar verbundenen zweiten Bauteil ausgebildet sind und bei welchen Hydraulikfluid über das erste Bauteil und das zweite Bauteil zu Schmierstellen führbar ist, tritt üblicherweise im Bereich einer Schnittstelle zwischen den Bauteilen ein Druckabfall auf. Derartige konstruktive Anordnungen zur Übertragung von Hydraulikfluid zwischen einem drehfesten Bauteil und einem damit drehbar verbundenen zweiten Bauteil sind beispielsweise bei Planetengetrieben erforderlich, über die Lagereinheiten und Zahneingriffe im erforderlichen Umfang mit Schmier- und Kühlöl versorgt werden.

Planetengetriebe finden auch im Bereich von Turbomaschinen, wie Flugtriebwerken, Verwendung. Üblicherweise weisen Turbomaschinen zwei oder drei Rotoren auf, die mit unterschiedlichen Drehzahlen mit der gleichen oder mit unterschiedlichen Drehrichtungen umlaufen. Bei sogenannten direkt angetriebenen Maschinen ist eine Niederdruckturbine bzw. eine Kompressoreinrichtung einer solchen Turbomaschine direkt mit einem Bläser verbunden, womit die Niederdruckturbine und der Bläser mit der gleichen Drehzahl rotieren. Bei der nächsten Generation von Turbofans mit hohem Nebenstromverhältnis wird die direkte Abhängigkeit zwischen der Bläsergeschwindigkeit und der Geschwindigkeit der Niederdruckturbine aufgelöst, um sowohl den Bläser als auch die Niederdruckturbine in optimalen Betriebsbereichen betreiben zu können. Ein Anstieg des Bläserdurchmessers erfordert in diesem Zusammenhang eine Reduktion der Bläserdrehzahl, während der Betriebswirkungsgrad der Niederdruckturbine durch Anheben der Drehzahl bei gleichzeitiger Reduktion des Schaufelradius verbesserbar ist. Der verbesserte Betriebswirkungsgrad bietet wiederum die Möglichkeit, die Niederdruckturbine mit einer geringeren Anzahl an Turbinenstufen auszuführen, womit die Niederdruckturbine durch ein geringeres Eigengewicht gekennzeichnet und kostengünstiger herstellbar ist.

Die derzeit effizienteste Methode zur Übertragung der Antriebsleistung der Niederdruckturbine und zum Absenken der Turbinendrehzahl in Bezug auf die für den Betrieb des Bläsers erforderliche Drehzahl stellt die Kopplung zwischen der Niederdruckturbine und dem Bläser über ein Untersetzungsgetriebe in Planetenbauweise dar. Dabei bieten Umlaufuntersetzungsgetriebe mit gehäusefestem Planetenträger oder mit drehbar ausgeführtem Planetenträger das gewünschte Untersetzungsverhältnis bei gleichzeitig hoher Leistungsdichte.

Um bei gehäusefest ausgeführtem Planetenträger das erforderliche Untersetzungsverhältnis im Bereich eines Umlaufgetriebes bzw. eines Planetenradsatzes zu erreichen, ist eine Kompressorwelle der Niederdruckturbine mit einem Sonnenrad eines Umlaufgetriebes verbunden. Das Hohlrad ist wiederum mit einer den Bläser antreibenden Bläserwelle gekoppelt. Die Reaktionsmomente werden im Bereich des statischen Planetenträgers in das Gehäuse eingeleitet. Ist das Hohlrad drehfest ausgeführt, liegt im Bereich des Sonnenrads eine hohe Eingangsdrehzahl bei gleichzeitig niedriger Ausgangsdrehzahl des Planetenträgers vor.

Im Unterschied hierzu ist es bei einem Bläserumlaufuntersetzungsgetriebe mit rotierendem Planetenträger vorgesehen, dass zur Versorgung von Schmierstellen im Bereich des Planetenradsatzes mit Hydraulikfluid Hydraulikfluid unter Druck aus einer statischen bzw. drehfesten Gehäusestruktur in eine rotierende Struktur bzw. in einen rotierenden Planetenträger überführt wird. Dann sind Lagereinrichtungen und Zahneingriffe des Planetenradsatzes in gleichem Umfang wie Lagereinheiten eines Hauptantriebsstrangs eines Triebwerks mit Schmier- und Kühlöl versorgbar.

Besonders sogenannte Hochgeschwindigkeitsplanetenradsätze sind jeweils mit einem entsprechend großen Hydraulikfluidvolumenstrom zu versorgen, um eine ausreichende Schmierung und Kühlung von Zahneingriffen zu gewährleisten und die im Betrieb auftretenden Wärmeverluste in entsprechendem Umfang abführen zu können.

Die bereits eingangs erwähnten Druckverluste treten besonders dann in unerwünschter Höhe auf, wenn hohe Ölvolumenströme zwischen solchen Bauteilen zu übertragen sind. Um die Druckverluste zu begrenzen, sind die Strömungsquerschnitte entsprechend groß zu dimensionieren, was jedoch wiederum zu einer Erhöhung eines Bauteilgewichtes führt und den Bauraumbedarf vergrößert.

Bei gängigen Triebwerkskonzepten werden Bläseruntersetzungsgetriebe über eine durch den Triebwerkskerngasstrom führende Ölzuführung mit Schmier- und Kühlöl versorgt. Die Hydraulikfluid führenden Leitungen verlaufen durch die Führungsschaufeln eines Triebwerks. Der Querschnitt der Führungsschaufeln ist umso größer auszuführen, je größer die zum Bläseruntersetzungsgetriebe zu führenden Ölvolumenströme sind, da die durch die Führungsschaufeln verlaufenden und Hydraulikfluid führenden Leitungen entsprechend groß zu dimensionieren sind. Diese Abhängigkeiten erfordern wiederum eine Erhöhung des Lufteinlassdurchmessers eines Triebwerks, was wiederum ein Gewicht eines Triebwerks erhöht und einen spezifischen Kraftstoffverbrauch vergrößert bzw. den Wirkungsgrad eines Triebwerks negativ beeinflusst.

Der vorliegenden Erfindung liegt daher die Aufgabe zugrunde, eine Vorrichtung mit einem drehfesten ersten Bauteil und einem zumindest bereichsweise mit dem ersten Bauteil drehbar verbundenen zweiten Bauteil zur Verfügung zu stellen, bei der Hydraulikfluid zwischen den Bauteilen in gewünschtem Umfang übertragbar ist.

Erfindungsgemäß wird diese Aufgabe mit einer Vorrichtung mit den Merkmalen des Patentanspruchs 1 gelöst.

Bei der erfindungsgemäßen Vorrichtung mit einem drehfesten ersten Bauteil und einem zumindest bereichsweise mit dem ersten Bauteil drehbar verbundenen zweiten Bauteil ist Hydraulikfluid über das erste Bauteil und das zweite Bauteil zu Schmierstellen führbar.

Erfindungsgemäß ist das zweite Bauteil mit in im Wesentlichen unter einem definierten Winkel in radialer Richtung im zweiten Bauteil verlaufenden Schaufelbereichen ausgeführt, zwischen welchen Übertragungsbereiche für Hydraulikfluid des zweiten Bauteiles vorgesehen sind, deren Strömungsquerschnitte sich in Strömungsrichtung des Hydraulikfluides in den Übertragungsbereichen verringern. Dadurch ist Hydraulikfluid ausgehend vom Überleitungsbereich der Schnittstelle in Richtung der Schmierstellen unter Nutzung der rotatorischen Energie des zweiten Bauteils weiterleitbar und im Bereich der Vorrichtung auftretende Druckverluste sind mit geringem Aufwand zumindest reduzierbar.

Wird das Hydraulikfluid entgegen der Rotationsrichtung des zweiten Bauteils in radialer Richtung durch die Übertragungsbereiche geführt, wird das Hydraulikfluid unter Ausnutzung der Rotationsenergie des zweiten Bauteils mit hohem Wirkungsgrad vom Überleitungsbereich der Schnittstelle in Richtung der Schmierstellen durch das zweite Bauteil geleitet.

Eine Weiterbildung der erfindungsgemäßen Vorrichtung ist mit einer Schnittstelle zwischen den Bauteilen ausgebildet, die gegenüber einer Umgebung der Bauteile über eine Dichteinrichtung abgedichtet ist und die den von sich in radialer Richtung übergreifenden Bereichen der Bauteile begrenzten und im Betrieb Hydraulikfluid führenden Überleitungsbereich umfasst, der sowohl mit Zuführbereichen für Hydraulikfluid des ersten Bauteils als auch mit Übertragungsbereichen für Hydraulikfluid des zweiten Bauteils in Verbindung steht.

Bildet die Schnittstelle den Hydraulikfluid führenden Bereich einer zumindest schwimmenden hydrodynamischen Lagerung zwischen den Bauteilen, ist das zweite Bauteil im Wesentlichen verschließfrei am ersten Bauteil drehbar gelagert. Dann ist die Vorrichtung durch eine hohe Lebensdauer gekennzeichnet und mit geringen Verlustleistungen betreibbar, womit im Betrieb der Vorrichtung geringe Verlustleistungen entstehen.

Die Dichteinrichtung ist bei einer durch eine hohe Dichtwirkung gekennzeichneten Ausführungsform der erfindungsgemäßen Vorrichtung jeweils im Bereich einer einer Oberfläche des ersten Bauteils oder des zweiten Bauteils zugewandten Oberfläche des zweiten Bauteils oder des ersten Bauteils mit wenigstens einem Gewindebereich ausgebildet.

Bei einer vorteilhaften Weiterbildung der erfindungsgemäßen Vorrichtung ist in zumindest einem dem Gewindebereich nahen Bereich des ersten Bauteils und/oder des zweiten Bauteils wenigstens ein im Bereich der Schnittstelle mündender Rückführbereich vorgesehen, der den Überleitungsbereich der Schnittstelle mit dem von dem Überleitungsbereich abgewandten Bereich des Gewindebereichs verbindet. Über den Rückführbereich wird auf einfache Art und Weise vermieden, dass der auf die den Gewindebereich umfassende Dichteinrichtung wirkende Druck reduziert wird und eine verschleißfreie Hochdruckbarriere nahe der primären Ölzuführpassage des ersten Bauteils vorliegt, über die der Überleitungsbereich der Schnittstelle abgedichtet wird. Über den Rückführbereich wird auf konstruktiv einfache Art und Weise ein aus einer vorliegenden Druckdifferenz, die durch den beim Durchströmen der Schnittstelle durch das Hydraulikfluid auftretenden Unterdruck entsteht, zwischen der Schnittstelle und dem von dem Überleitungsbereich der Schnittstelle abgewandten Bereich des Gewindebereichs resultierendes Ansaugen von Fluid aus der Umgebung der Bauteile in Richtung der Schnittstelle verhindert, da über den Rückführbereich Hydraulikfluid ausgehend von der Schnittstelle zu dem von dem Überleitungsbereich der Schnittstelle abgewandten Bereich des Gewindebereichs und anschließend über den Gewindebereich zurück zum Überleitungsbereich führbar ist.

Der Rückführbereich ist bei einer konstruktiv einfachen und mit geringem Aufwand herstellbaren Weiterbildung der erfindungsgemäßen Vorrichtung als Kanal oder als Bohrung im ersten Bauteil und/oder im zweiten Bauteil ausgebildet.

Erhöhen sich die Steigung und die Höhe von Gewindegängen des Gewindebereiches mit zunehmendem Abstand von der Schnittstelle, wird das Hydraulikfluid aufgrund der erfindungsgemäß variierenden Gewindesteigung und der ebenfalls veränderten Gewindetiefe in den vom Überleitungsbereich abgewandten Bereichen des Gewindebereichs stärker beschleunigt und mit höherer Geschwindigkeit in Richtung des Überleitungsbereichs zurückgeführt. Gleichzeitig liegt aufgrund der in Abhängigkeit des Abstandes vom Überleitungsbereich variierenden konstruktiven Ausführung des Gewindebereiches in den dem Überleitungsbereich der Schnittstelle nahen Bereichen des Gewindebereichs ein höherer Druck vor, der einem Einströmen von Hydraulikfluid ausgehend vom Überleitungsbereich der Schnittstelle in einen Zwischenraum zwischen dem Gewindebereich des ersten Bauteils oder des zweiten Bauteils und der zugeordneten Oberfläche des zweiten Bauteils oder des ersten Bauteils entgegenwirkt. Damit wird eine Strömung von Hydraulikfluid ausgehend vom Überleitungsbereich in Richtung der Umgebung der Bauteile wirkungsvoll auf einfache Art und Weise vermieden.

Ist der Überleitungsbereich der Schnittstelle in axialer Erstreckung der Bauteile zwischen Gewindebereichen der Dichteinrichtung angeordnet, ist der Überleitungsbereich bei entsprechender konstruktiver Ausführung der Vorrichtung in gewünschtem Umfang gegenüber der Umgebung der Bauteile abgedichtet.

Bei einer durch eine hohe Dichtwirkung gekennzeichneten Ausführungsform der erfindungsgemäßen Vorrichtung weist der Gewindebereich ein mehrgängiges Gewinde auf.

Der den Überleitungsbereich der Schnittstelle begrenzende Bereich des ersten Bauteils ist innerhalb des den Überleitungsbereich der Schnittstelle mitbegrenzenden Bereichs des zweiten Bauteils angeordnet oder der Bereich des zweiten Bauteils ist innerhalb des Bereichs des ersten Bauteils angeordnet, womit die erfindungsgemäße Vorrichtung auf einfache Art und Weise an den jeweils vorliegenden Anwendungsfall angepasst ausführbar ist.

Ist das erste Bauteil über Bolzenelemente gegen Verdrehen in Langlöchern gehalten, sind beispielsweise radiale Auslenkungen eines Triebwerks und relative Bewegungen in definierten Grenzen möglich. Sind die Bolzenelemente an den geraden Flanken der Langlöcher anliegend angeordnet, wird ein bolzenseitiges Zentrieren des ersten Bauteils anstelle des zweiten Bauteils verhindert.

Bei weiteren vorteilhaften Ausführungsformen der erfindungsgemäßen Vorrichtung ist das Hydraulikfluid über das erste Bauteil und die Schnittstelle radial von innen nach außen oder von außen nach innen in das zweite Bauteil hinein führbar.

Umfasst die Vorrichtung mehrere über den Umfang des ersten Bauteils symmetrisch verteilt angeordnete Ölzuführbereiche, sind die Querschnitte der Ölzuführbereiche, die bei einer Anwendung der Vorrichtung im Bereich eines Flugtriebwerks durch den Kernstrom zu führen sind, mit einem gewünscht kleinen Durchmesser ausführbar, womit eine geringere Beschränkung des Strömungsquerschnitts des Kernstroms und damit eine geringere Blockade des Kernstroms sowie eine höhere Strömungsgeschwindigkeit des Ölvolumenstroms durch die mehreren Ölzuführbereiche erzielt wird. Die höhere Strömungsgeschwindigkeit führt vorteilhafterweise wiederum zu einer verbesserten Öl- und Druckverteilung im Hydraulikfluidvolumenstrom und begünstigt damit sowohl das Lagerverhalten der schwimmenden hydrodynamischen Lagerung des zweiten Bauteils am ersten Bauteil und auch die Dichtwirkung der Dichteinrichtung.

Ist auf der der Schnittstelle abgewandten Seite des Gewindebereichs eine weitere vorzugsweise einen Dichtring umfassende Dichteinrichtung vorgesehen, ist der Überleitungsbereich der Schnittstelle neben der eine robuste dynamische Dichtfunktion zur Verfügung stellenden Dichteinrichtung auch über eine statische Dichtung gegenüber der Umgebung abgedichtet.

Bei den vorbeschriebenen Ausführungsvarianten der erfindungsgemäßen Vorrichtung ist das zweite Bauteil über eine schwimmende hydrodynamische Lagerung drehbar am ersten Bauteil und damit ohne mechanischen Kontakt nahezu verschleißfrei gelagert und/oder ein Hydraulikfluid führender Bereich zwischen den Bauteilen zusätzlich mit hoher Dichtwirkung verschleißfrei abgedichtet, womit die Ölversorgung durch eine niedrige Ausfallwahrscheinlichkeit und eine hohe Lebensdauer gekennzeichnet ist und einen geringen Wartungsaufwand verursacht.

Hierfür wird der Überleitungsbereich der Schnittstelle von dem wenigstens einen Gewindebereich berührungsfrei gegenüber der Umgebung der Bauteile abgedichtet. Da hohe Drehgeschwindigkeiten des zweiten Bauteils sowohl die Wirkungsweise der selbstzentrierenden hydrodynamischen Ölverbindung zwischen den beiden Bauteilen begünstigen als auch die Dichtwirkung im Gewindebereich erhöhen, ist die erfindungsgemäße Vorrichtung insbesondere für Anwendungen geeignet, bei welchen hohe Drehgeschwindigkeiten auftreten.

Grundsätzlich ist die erfindungsgemäße Ausführung der Vorrichtung in besonderem Umfang auch dazu geeignet, Hydraulikfluid ausgehend von einem gehäusefesten Bereich in Hydraulikfluid führende Bereiche eines Planetenträgers zu überführen, der drehbar in dem Gehäusebereich oder auf dem Gehäusebereich angeordnet ist, um von dort aus Lagerungen, Zahneingriffe und weitere schmier- und kühlintensive Bereiche eines Planetengetriebes und auch weiterer mit einem Planetengetriebe zusammenwirkender Einrichtungen mit Hydraulikfluid versorgen zu können.

Sowohl die in den Patentansprüchen angegebenen Merkmale als auch die in den nachfolgenden Ausführungsbeispielen der erfindungsgemäßen Vorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Vorrichtung ergeben sich aus den Patentansprüchen und aus den nachfolgend unter Bezugnahme auf die Zeichnung prinzipmäßig beschriebenen Ausführungsbeispielen, wobei in der Beschreibung der Ausführungsbeispiele zugunsten der Übersichtlichkeit für bau- und funktionsgleiche Bauteile dieselben Bezugszeichen verwendet werden.

Es zeigt:
- Fig. 1: eine stark schematisierte Teillängsschnittansicht eines Flugtriebwerks mit einer Vorrichtung gemäß der Erfindung;
- Fig. 2: eine schematisierte Querschnittansicht einer ersten Ausführungsform der erfindungsgemäßen Vorrichtung;
- Fig. 3: eine Längsschnittansicht der Vorrichtung gemäß Fig. 2 entlang einer in Fig. 2 näher gekennzeichneten Schnittebene III-III;
- Fig. 4: eine Fig. 2 entsprechende Darstellung einer zweiten Ausführungsform der erfindungsgemäßen Vorrichtung;
- Fig. 5: eine Längsschnittansicht der Vorrichtung gemäß Fig. 4 entlang einer in Fig. 4 näher gekennzeichneten Schnittebene V-V;
- Fig. 6: eine Fig. 2 entsprechende Darstellung einer dritten Ausführungsform der erfindungsgemäßen Vorrichtung; und
- Fig. 7: eine Längsschnittansicht der Vorrichtung gemäß Fig. 6 entlang einer in Fig. 6 näher gekennzeichneten Schnittebene VII-VII.

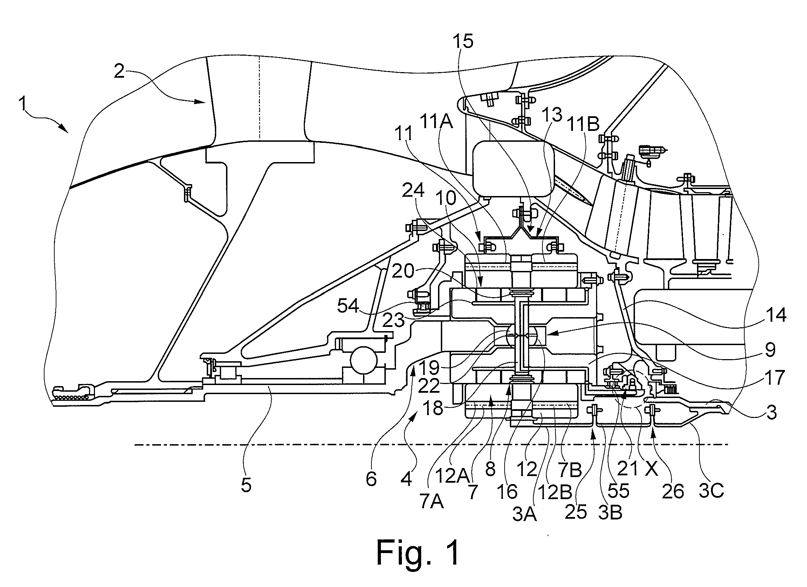

Fig. 1 zeigt eine Teillängsschnittansicht eines Flugtriebwerks 1, die einen vorderen Bereich des vorliegend als Gasturbinenmaschine ausgeführten Flugtriebwerks darstellt. Das Flugtriebwerk 1 ist in einem hinteren Bereich mit einer nicht näher dargestellten Kompressoreinrichtung und in einem vorderen Bereich mit einer Bläsereinrichtung ausgeführt. Die Bläsereinrichtung 2 ist von der Kompressoreinrichtung antreibbar, wobei die Kompressoreinrichtung hierfür im Bereich einer Kompressorwelle 3 über ein Umlaufgetriebe 4 mit einer Bläserwelle 5 in Verbindung steht. Ein Planetensteg 6 des Umlaufgetriebes 4 ist über in Planetenrädern 7 angeordnete Lagereinrichtungen 8 mit den Planetenrädern 7 verbunden, die in an sich bekannter Art und Weise drehbar auf dem Planetensteg angeordnet sind.

Die Lagereinrichtungen 8 umfassen jeweils eine sphärische Lagereinheit 9 zum Ausgleich von Kippbewegungen zwischen dem Planetenträger bzw. dem Planetensteg und den Planetenrädern 7 und eine weitere Lagereinheit 10 zur Drehentkopplung zwischen dem Planetenträger 6 und den Planetenrädern 7. Der Planetenträger 6 ist mit der Bläserwelle 5 drehfest verbunden, während ein Sonnenrad 12 des Umlaufgetriebes 4 drehfest mit der Kompressorwelle 3 wirkverbunden ist.

Ein Hohlrad 11 ist über eine flexible Verbindungseinrichtung 13 gehäuseseitig drehfest gehalten. Im Bereich der Verbindungseinrichtung 13 sind Bewegungen zwischen dem Hohlrad 11 und einem Gehäuse 14 in radialer und in axialer Richtung wenigstens annähernd kompensierbar bzw. ausgleichbar, womit Zahneingriffe im Bereich zwischen den Planetenrädern 7 und dem Hohlrad 11 sowie zwischen den Planetenrädern 7 und dem Sonnenrad 12 unabhängig von im Bereich des Gehäuses 14 durch angreifende Lasten verursachte Bewegungen des Gehäuses in gewünschtem Umfang störungsfrei vorliegen und die Planetenräder 7 sowohl mit dem Hohlrad 11 als auch mit dem Sonnenrad 12 möglichst verlustfrei und mit geringem Verschleiß kämmen.

Die flexible Verbindungseinrichtung 13 umfasst einen im Querschnitt wenigstens annähernd u-förmig ausgeführten Bereich 15, der sowohl in axialer Richtung als auch in radialer Richtung des Flugtriebwerks 1 die gewünschte flexible Anbindung des Hohlrads 11 am Gehäuse 14 ermöglicht und gleichzeitig in Umfangsrichtung entsprechend steif ausgeführt ist, um im Betrieb des Flugtriebwerks 1 im Bereich des Umlaufgetriebes 4 auftretende Reaktionsmomente in gewünschtem Umfang über das Hohlrad 11 im Bereich des Gehäuses 14 abstützen zu können.

Der Planetenträger 6 greift mit fingerartigen Bereichen 16 in die Planetenräder 7 ein, wobei der Planetenträger 6 vorliegend mit den fingerartigen Bereichen 16 mit den sphärischen Lagereinheiten 9 verbunden ist und über diese mit ebenfalls radial innerhalb der Planetenräder 7 angeordneten Innenlagerelementen 17 in Wirkverbindung steht. Die Innenlagerelemente 17 sind über die zwischen den Planetenrädern 7 und den Innenlagerelementen 17 angeordneten weiteren Lagereinheiten 10 drehbar mit den Planetenrädern 7 verbunden. Zusätzlich ist der Planetenträger 6 im Bereich der fingerartigen Bereiche 16 über in radialer Richtung des Umlaufgetriebes 4 verlaufend angeordnete Bolzenelemente 18 jeweils mit den Innenlagerelementen 17 gekoppelt. Dabei fluchten die Bolzenelemente 18 jeweils in etwa mit der Mitte der Planetenräder 7 und durchgreifen jeweils ein mit einem im Bereich der fingerartigen Bereiche 16 des Planetenträgers 6 angeordnetes und zumindest bereichsweise sphärisch ausgeführtes Koppelelement 19 der sphärischen Lagereinheiten 9, womit der Planetensteg 6 auch mit den Innenlagerelementen 17 verbunden ist. Zusätzlich sind die Bolzenelemente 18 im Bereich der Innenlagerelemente 17 vorliegend über Federringe 20 in radialer Richtung des Umlaufgetriebes 4 im Bereich der Innenlagerelemente 17 gesichert, um die Wirkverbindung zwischen dem Planetensteg 6 und den Innenlagerelementen 17 bei rotierenden Planetenrädern 7 über den gesamten Betriebsbereich des Flugtriebwerks 1 gewährleisten zu können. Die weiteren Lagereinheiten 10 sind vorliegend als Zylinderrollenlager ausgeführt, in deren Bereichen Radialkräfte in gewünschtem Umfang zwischen den Planetenrädern 7 und dem Planetensteg 6 übertragbar sind.

Sowohl die Planetenräder 7, das Sonnenrad 12 als auch das Hohlrad 11 sind jeweils mit zwei voneinander getrennten und in axialer Richtung voneinander beabstandeten schrägverzahnten Zahnbereichen 7A und 7B, 11A und 11 B sowie 12A und 12B ausgeführt. Die Schrägungswinkel der Zahnbereiche 7A und 7B der Planetenräder 7, der Zahnbereiche 11A und 11 B des Hohlrads 11 und der Zahnbereiche 12A und 12B des Sonnenrads 12 sind zur Minimierung axialer Verzahnungskräfte gegengleich ausgeführt. Das bedeutet, dass Zähne der Zahnbereiche 7A und 7B sowie der Zahnbereiche 11 A und 11 B und auch der Zahnbereiche 12A und 12B jeweils schräg angeordnet sind, wobei der Schrägungswinkel jeweils den gleichen Wert aufweist, jedoch jeweils spiegelbildlich zum dem korrespondierenden Zahnbereich der Planetenräder 7, des Hohlrads 11 und des Sonnenrads 12 ausgeführt ist.

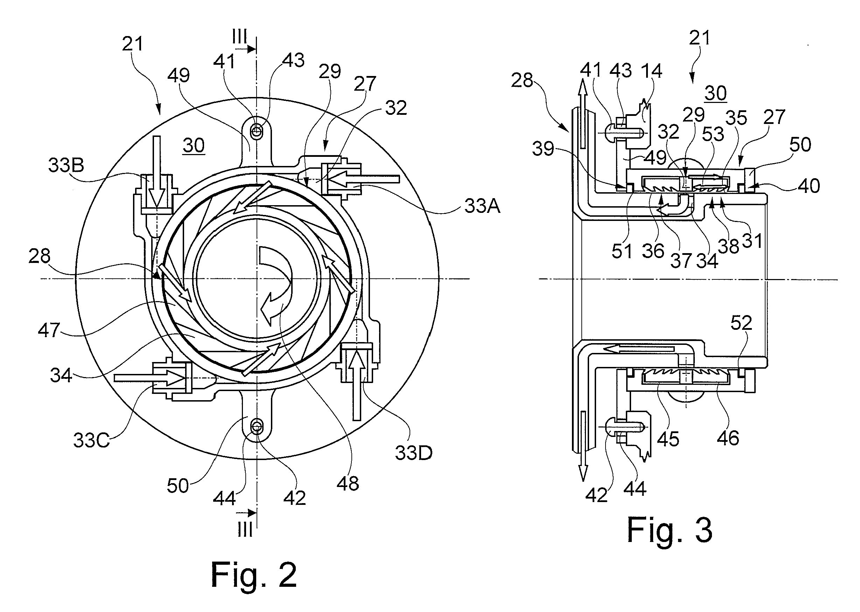

Damit die Verzahnungen im Bereich des Umlaufgetriebes 4 in gewünschtem Umfang mit Schmier- und Kühlöl versorgbar sind, wird über die im Bereich X des Flugtriebwerks 1 angeordnete Vorrichtung 21 in der nachfolgend zu Fig. 2 bis Fig. 7 jeweils näher beschriebenen Art und Weise Hydraulikfluid aus dem Gehäuse 14 in die Innenlagerelemente 17 eingeleitet, die im Wesentlichen einen Teil des Planetenträgers 6 darstellen und mit dem Planetenträger 6 umlaufen. Hieran anschließend wird das Hydraulikfluid über in den Bolzenelementen 18 angeordnete Schmier- und Kühlölleitungen 22 in radialer Richtung des Umlaufgetriebes 4 von den sphärischen Lagereinheiten 9 in im Wesentlichen in axialer Richtung verlaufende weitere Leitungen 23 weitergeleitet. Von dort aus wird das Schmier- und Kühlöl wiederum in in radialer Richtung der Innenlagerelemente 17 verlaufenden zusätzlichen Leitungen 24 zu den weiteren Lagereinheiten 10 weitergeleitet. Dabei wird das Schmier- und Kühlöl im Betrieb des Flugtriebwerks 1 mithilfe der rotierenden Planetenräder 7 auch in Richtung der Zahneingriffe zwischen den Planetenrädern 7 und dem Hohlrad 11 sowie zwischen den Planetenrädern 7 und dem Sonnenrad 12 in gewünschtem Umfang weitergeleitet.

Der Planetenträger 6 des Umlaufgetriebes 4 ist vorliegend im Bereich von zwei Lagereinheiten 54, 55 gelagert, zwischen welchen das Umlaufgetriebe 4 angeordnet ist und in deren Bereich die am Planetenträger 6 angreifenden Belastungen in das Gehäuse 14 eingeleitet bzw. abgestützt werden. Da der Planetenträger 6 im Bereich der Vorrichtung 21 mit verringerter Steifigkeit ausgebildet ist, ist die Vorrichtung 21 wie in Fig. 1 dargestellt außerhalb des zwischen den Lagereinheiten 54, 55 liegenden Bereiches vorgesehen.

Um im Bereich des Sonnenrads 12 angreifende Biegemomente auf ein Minimum reduzieren zu können, ist die Kompressorwelle 3 vorliegend in einem definierten Umfang biegeweich ausgeführt, dass eventuell vorliegende Exzentrizitäten zwischen der Kompressorwelle 3 und dem Sonnenrad 12 ausgleichbar sind, ohne übermäßige Fluchtungsfehler im Bereich der Keilwellenverbindung zwischen der Kompressorwelle 3 und dem Sonnenrad 12 zu erzeugen. Damit ist gewährleistet, dass das Sonnenrad 12 im Betrieb seine gewünschte Position einnimmt. Die Kompressorwelle 3 ist hierfür in mehrere über Flanschbereiche 25, 26 miteinander verbundene Bereiche 3A bis 3C aufgeteilt.

Fig. 2 zeigt eine Querschnittansicht einer ersten Ausführungsform der Vorrichtung 21 mit einem drehfest mit dem Gehäuse 14 verbundenen ersten Bauteil 27 und mit einem bereichsweise mit dem ersten Bauteil 27 drehbar verbundenen zweiten Bauteil 28, das wiederum mit den Innenlagerelementen 17 drehfest verbunden ist, um Hydraulikfluid über das erste Bauteil 27 und das zweite Bauteil 28 zu den Schmierstellen des Umlaufgetriebes 4 führen zu können. Hierfür ist eine Schnittstelle 29 zwischen den beiden Bauteilen 27 und 28 gegenüber einer Umgebung 30 bzw. einem Innenraum des Flugtriebwerks 1 über eine Dichteinrichtung 31 in der nachfolgend näher beschriebenen Art und Weise abgedichtet.

Die Schnittstelle 29 umfasst einen von sich in radialer Richtung übergreifenden Bereichen der Bauteile 27 und 28 begrenzten und im Betrieb Hydraulikfluid führenden Überleitungsbereich 32, der sowohl mit Zuführbereichen 33A bis 33D des ersten Bauteils 27 als auch mit Übertragungsbereichen 34 für Hydraulikfluid des zweiten Bauteils 28 in Verbindung steht. Der Überleitungsbereich 32 bildet den Öl bzw. Hydraulikfluid führenden Bereich einer schwimmenden hydrodynamischen Lagerung zwischen den Bauteilen 27 und 28, über die das Bauteil 28 im Wesentlichen berührungslos und verschleißfrei am drehfest ausgeführten Bauteil 27 gelagert ist. Die Zuführbereiche 33A bis 33D sind vorliegend als flexible Schläuche ausgebildet und über den Umfang des ersten Bauteils 27 und des zweiten Bauteils 28 symmetrisch verteilt angeordnet, um ein gleichmäßiges Druckprofil über dem Umfang der Bauteile 27 und 28 zu erzeugen. Dies ist von Vorteil, da dann das zweite Bauteil 28 über ein hydrodynamisches Lager im ersten Bauteil 27 in radialer Richtung gelagert ist. In diesem Bereich liegt jedoch im Wesentlichen kein lasttragendes hydrodynamisches Gleitlager im eigentlichen Sinne vor. Über die schwimmende Lagerung des zweiten Bauteiles wird eine gute Abdichtung ohne mechanischen Kontakt erreicht.

Die Dichteinrichtung 31 ist im Bereich einer einer Oberfläche 35 des zweiten Bauteils 28 zugewandten Oberfläche 36 mit Gewindebereichen 37, 38 ausgeführt, die den Überleitungsbereich 32 in axialer Richtung gegenüber der Umgebung 30 abdichten und dabei eine robuste dynamische Dichtfunktion zur Verfügung stellen. Die Dichtfunktion liegt auch dann vor, wenn statische Dichteinrichtungen 39 und 40 ausfallen. Die statischen Dichteinrichtungen 39 und 40 sind jeweils auf den zum Überleitungsbereich 32 abgewandten Seiten bzw. Enden des ersten Bauteils 27 bzw. der Gewindebereiche 37 und 38 vorgesehen und stellen bei dichtender Dichteinrichtung 31 lediglich sogenannte backup-Dichtungen dar. Des Weiteren sind die weiteren Dichteinrichtungen 39 und 40 in axialer Richtung von Scheibenelementen 49 und 50 in Nuten 51, 52 des ersten Bauteils 27 gehalten.

Die Vorrichtung 21 stellt eine schwimmende Ölkopplung zwischen dem ersten Bauteil 27 und dem zweiten Bauteil 28 her, um aus einem statischen bzw. nicht drehbaren Bereich bzw. dem ersten Bauteil 27 Hydraulikfluid in gewünschtem Umfang in einen rotierenden Bereich, d. h. vorliegend in das drehbare Bauteil 28 einzuleiten. Dabei ist das erste Bauteil 27 über mehrere Bolzenelemente 41, 42 drehfest im Bereich des Gehäuses 14 festgelegt, wobei die Bolzenelemente 41, 42 in Langlöchern 43, 44 angeordnet sind, um Gehäuseauslenkungen des Flugtriebwerks 1 und auch relative Bewegungen zwischen dem Gehäuse 14 und dem ersten Bauteil 27 sowie dem zweiten Bauteil 28 zu ermöglichen. Zusätzlich sind die Bolzenelemente 41 und 42 in Umfangsrichtung der Bauteile 27 und 28 an geraden Flanken der Langlöcher 43 und 44 anliegend angeordnet. Damit wird ein bolzenseitiges Zentrieren des statischen Ölzuführkopplungskörpers bzw. des ersten Bauteils 27 anstelle der Trägerwelle bzw. des zweiten Bauteils 28 verhindert.

Die radialen Abstände zwischen der statischen Kopplung und den rotierenden Bereichen bzw. zwischen den Oberflächen 35 und 36 der Bauteile 27 und 28 sind vorliegend fertigungstechnisch auf ein absolutes Minimum begrenzt, um den Ölabfluss im Bereich zwischen dem Bauteil 28 und den Gewindebereichen 37 und 38 des ersten Bauteils 27 in Richtung der Umgebung 30 zu minimieren, den dynamischen Dichteffekt im Bereich der Dichteinrichtung 31 gering zu halten und die Dichtwirkung der Dichteinrichtung 31 in gewünschtem Umfang zu erzielen. Zudem ist die im Wesentlichen berührungslose Dichteinrichtung 31 trotz der geringen Spaltmaße durch einen geringen Verschleiß gekennzeichnet. Die zwischen den Bauteilen 27 und 28 vorliegende hydrodynamische Selbstzentrierung gewährleistet ein schwimmendes statisches Gehäuse, das mit dem rotierenden Bauteil 28 ohne einen Metall-Metall-Kontakt eine besonders günstige verschleißfreie Anordnung bildet.

Da das über die Zuführbereiche 33A bis 33D in den Überleitungsbereich 32 einströmende und von dort in Richtung der Übertragungsbereiche 34 des zweiten Bauteils 28 abfließende Hydraulikfluid im Bereich zwischen den Gewindebereichen 37 und 38 und dem zweiten Bauteil 28 einen Unterdruck erzeugt und ein Ansaugen von Luft über die Dichteinrichtung 31 ausgehend von der Umgebung 30 in Richtung des Überleitungsbereichs 32 vermieden werden soll, sind in den den Gewindebereichen 37 und 38 nahen Bereichen des ersten Bauteils 27 im Bereich der Schnittstelle 29 mündende Rückführbereiche 45, 46 vorgesehen, die den Überleitungsbereich 32 mit von der Schnittstelle 29 abgewandten Bereichen der Gewindebereiche 37 und 38 verbinden. Über die Rückführbereiche 45 und 46 strömt das über die Zuführbereiche 33A bis 33D unter Druck zugeführte Hydraulikfluid zum Teil von der Schnittstelle 29 in Richtung von in axialer Richtung von der Schnittstelle 29 abgewandten Enden der Gewindebereiche 37 und 38.

Das bedeutet, dass von der Schnittstelle 29 über die Rückführbereiche 45 und 46 Hydraulikfluid in Bereiche des ersten Bauteils 27 strömt, die zwischen den Gewindebereichen 37 und 38 und den weiteren Dichteinrichtungen 39 und 40 angeordnet sind. Dieses Hydraulikfluid wird dann durch den von dem durch den Überleitungsbereich 32 strömenden Hydraulikfluid verursachten Unterdruck in Form eines Zirkulationsstroms ausgehend von der Schnittstelle 29 über die Rückführbereiche 45 und 46 und über die Gewindebereiche 37 und 38 zurück in den Überleitungsbereich 32 geführt. Damit wird ein Ansaugen von Luft über die weiteren Dichteinrichtungen 39 und 40 und die Gewindebereiche 37 und 38 aus der Umgebung 30 auf konstruktiv einfache Art und Weise verhindert.

Über die Gewindebereiche 37 und 38 sowie die Rückführbereiche 45 und 46 wird der auf die Dichteinrichtung 31 und auch der auf die weiteren Dichteinrichtungen 39 und 40 wirkende Druck reduziert und zusätzlich eine Hochdruckbarriere nahe der primären Ölzuführpassage bzw. der Zuführbereiche 33A bis 33D erzeugt, die eine hohe Dichtwirkung zur Verfügung stellende dynamische Dichtung ausbildet. Dadurch wird die Ausfallwahrscheinlichkeit reduziert und die Lebensdauer der Dichtringe aufweisenden weiteren Dichteinrichtungen 39 und 40 verbessert.

Die Rückführbereiche 45 und 46 sind in Abhängigkeit des jeweils vorliegenden Anwendungsfalls entweder im ersten Bauteil 27 oder im zweiten Bauteil 28 anordenbar, wobei jeweils die Anordnung ausgewählt wird, mit der jeweils der bessere Rückführdruck erzielt wird.

In Abhängigkeit des jeweils vorliegenden Anwendungsfalls ist die Vorrichtung 21 mit einem oder mit mehreren über den Umfang der Bauteile 27 und 28 verteilt angeordneten Rückführbereichen 45 und 46 ausgeführt, um das zuvor erwähnte Ansaugen von Luft aus der Umgebung über den gesamten Umfang der Bauteile 27 und 28 wirkungsvoll zu vermeiden.

Über die Rückführbereiche 45 und 46 wird Hydraulikfluid über die Gewindebereiche 37 und 38 in Richtung des Überleitungsbereichs 32 geführt und zusätzlich im Bereich der weiteren Dichteinrichtungen 39 und 40 ein positiver Druck erzeugt, womit das Ansaugen von Luft aus der Umgebung 30 über die weiteren Dichteinrichtungen 39 und 40 und auch die Gewindebereiche 37 und 38 mit geringem Aufwand vermieden wird.

Die Gewindebereiche 37 und 38 sind vorliegend jeweils mit eingängigen Gewinden ausgeführt und können auch mehrgängige Gewinde umfassen. Auf jeden Fall sind die Gewindebereiche 37 und 38 in ihren dem Überleitungsbereich 32 abgewandten Enden mit einer höheren Gewindesteigung und mit einer größeren Gewindetiefe ausgebildet als in dem Überleitungsbereich 32 zugewandten Bereichen. Dadurch, dass sich sowohl die Gewindesteigung als auch die Gewindetiefe mit abnehmendem Abstand zum Überleitungsbereich 32 reduzieren, wird das Öl in den äußeren Bereichen der Gewindebereiche 37 und 38 stärker beschleunigt und mit höherer Geschwindigkeit in Richtung des Überleitungsbereichs 32 zurückgeführt, während in den dem Überleitungsbereich 32 nahen Bereichen der Gewindebereiche 37 und 38 ein höherer Fluiddruck vorliegt, der einem Einströmen von Hydraulikfluid ausgehend vom Überleitungsbereich 32 in den Zwischenraum zwischen den Gewindebereichen 37 und 38 und dem zweiten Bauteil 28 entgegenwirkt. Damit wird eine Strömung von Hydraulikfluid ausgehend vom Überleitungsbereich 32 entgegen der durch den Pfeil 53 gekennzeichneten Strömungsrichtung des Hydraulikfluids wirkungsvoll und auf einfache Art und Weise vermieden.

Die Übertragungsbereiche 34 des zweiten Bauteils 28 sind in der in Fig. 2 dargestellten Art und Weise zwischen im Wesentlichen in radialer Richtung verlaufenden Schaufelbereichen 47 angeordnet bzw. werden von jeweils zwei Schaufelbereichen 47 begrenzt. Die Schaufelbereiche 47 sind in das zweite Bauteil 28 integriert bzw. mit diesem verbunden und in Drehrichtung 48 des zweiten Bauteils 28 radial nach außen gerichtet winkelig gegenüber der rein radialen Erstreckung des zweiten Bauteils 28 verlaufend ausgeführt. Aufgrund der winkeligen Anordnung der Schaufelbereiche 47 verengen sich die Strömungsquerschnitte der Übertragungsbereiche 34 in Strömungsrichtung des Hydraulikfluids in den Übertragungsbereichen 34 ausgehend von der Schnittstelle 29 in Richtung der Schmierstellen des Umlaufgetriebes 4 im dargestellten Umfang.

Das über die Zuführbereiche 33A bis 33D unter Druck zugeführte Hydraulikfluid wird entgegen der Drehrichtung 48 des zweiten Bauteils 28 von der Schnittstelle 29 bzw. dessen Überleitungsbereich 32 in die Übertragungsbereiche 34 mit hoher Relativgeschwindigkeit gegenüber den Schaufelbereichen 47 eingeleitet. Die hohe Relativgeschwindigkeit zwischen dem Hydraulikfluid und den Schaufelbereichen 47, die unter anderem eine Funktion des Betriebszustandes des Zuführungsstroms ist, und die entgegengesetzte Drehrichtung 48 des zweiten Bauteils 28 sowie der Anstellwinkel und die Orientierung der Schaufelbereiche 47 gewährleisten, dass das Hydraulikfluid bei dem in Fig. 2 und Fig. 3 dargestellten Ausführungsbeispiel der Vorrichtung 21 durch das Bauteil 28 radial nach innen geführt und in den Übertragungsbereichen 34 bedruckt wird. Die Anzahl der Schaufelbereiche 34 des zweiten Bauteils 28 kann zur Abstimmung des Torsionsverhaltens des Umlaufgetriebes 4 ausgewählt werden.

Zusätzlich zu den vorgenannten Vorteilen, die durch die mehreren über den Umfang der Bauteile 27 und 28 verteilt angeordnete Ölzuführbereiche 33A bis 33D erzielt werden, können die Durchmesser der Zuführbereiche 33A bis 33D im Vergleich zu einer kleineren Anzahl an Ölzuführungen kleiner dimensioniert werden, ohne den Gesamtvolumenstrom dadurch zu begrenzen. Zuführleitungen mit kleinerem Durchmesser, die in Führungsschaufeln durch den Kernstrom des Flugtriebwerks 1 geführt werden, schränken den Querschnitt des Kernstroms in geringerem Umfang ein. Darüber hinaus wird Hydraulikfluid in den kleineren Strömungsquerschnitten der Ölzuführung mit einer höheren Strömungsgeschwindigkeit in die Schnittstelle 29 eingeleitet, wodurch wiederum eine verbesserte Öl- und Druckverteilung im Volumenstrom erreicht wird, der gegen die Drehrichtung des zweiten Bauteils 28 in die Übertragungsbereiche 34 eingeleitet wird.

Mittels dieser Vorgehensweise und der dabei auftretenden Geschwindigkeitsdifferenz wird stromab der Vorrichtung 21 ein für die Versorgung der Schmierstellen gewünscht hoher Versorgungsdruck erzielt, wobei über die durch die Rotation des zweiten Bauteils 28 zur Verfügung stehende additive Energie ein unerwünschter Druckabfall im Bereich der Vorrichtung 21 ohne zusätzlichen Aufwand verhindert wird. Sowohl die Form als auch die Anzahl der Ölzuführbereiche 33A bis 33D werden so ausgelegt bzw. definiert, dass das Hydraulikfluid im Übertragungspfad des Hydraulikfluids aufgrund des vorliegenden Drucks und der dort jeweils vorliegenden Strömungsgeschwindigkeit mit hohem Wirkungsgrad übertragen wird. Des Weiteren werden auch die Anordnungen der Ölzuführbereiche 33A bis 33D und der Schaufelbereiche 47 aufeinander abgestimmt, um einen maximalen Druckanstieg zu erreichen und einen maximalen Ölvolumenstrom durch die Vorrichtung 21 führen zu können.

Grundsätzlich besteht die Möglichkeit, die Bauteile 27 und 28 mittels eines sogenannten ALM-Verfahrens (Additive-Layer-Manufacturing) bzw. mittels eines 3D-Druckverfahrens herzustellen oder die Bauteile 27 und 28 mithilfe maschineller Fertigungsverfahren herzustellen, die die Ölzuführbereiche für entsprechende Einrichtungen aufweisen, wobei mittels ALM-Prozessen komplexe integrierte Ölzuführeinrichtungen herstellbar sind.

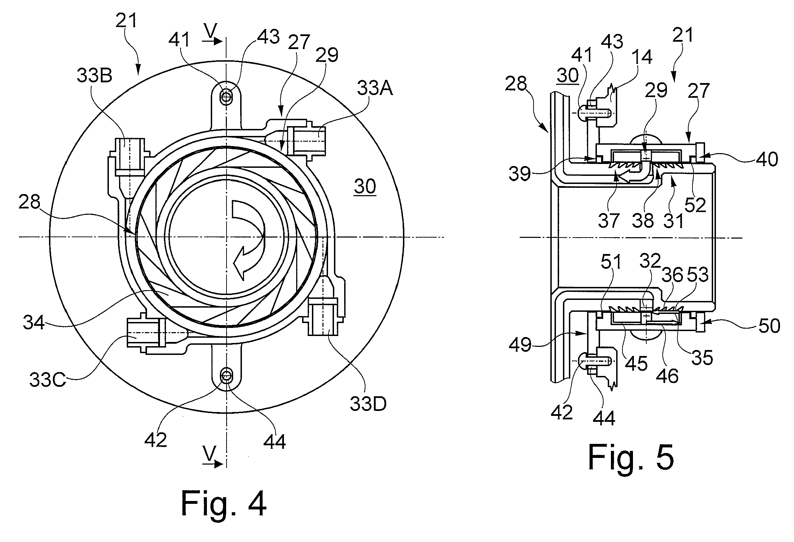

Fig. 4 und Fig. 5 zeigen ein zweites Ausführungsbeispiel der Vorrichtung 21, das im Wesentlichen der in Fig. 2 und Fig. 3 dargestellten ersten Ausführungsform der Vorrichtung 21 entspricht, weshalb in der nachfolgenden Beschreibung lediglich auf die Unterschiede zwischen den beiden Ausführungsformen der Vorrichtung 21 näher eingegangen wird und bezüglich der weiteren Funktionsweise der Vorrichtung 21 gemäß Fig. 4 und Fig. 5 auf die vorstehende Beschreibung zu Fig. 2 und Fig. 3 verwiesen wird.

Bei der Vorrichtung 21 gemäß Fig. 4 und Fig. 5 sind die Gewindebereiche 37 und 38 im Bereich der Oberfläche 35 des zweiten Bauteils 28 angeordnet, um den Überleitungsbereich 32 der Schnittstelle 29 im vorbeschriebenen Umfang gegenüber der Umgebung 30 der Bauteile 27 und 28 abzudichten, während die Rückführbereiche 45 und 46 in dem in der vorstehenden Beschreibung näher erläuterten Umfang im Bereich des ersten Bauteils 27 verlaufend vorgesehen sind.

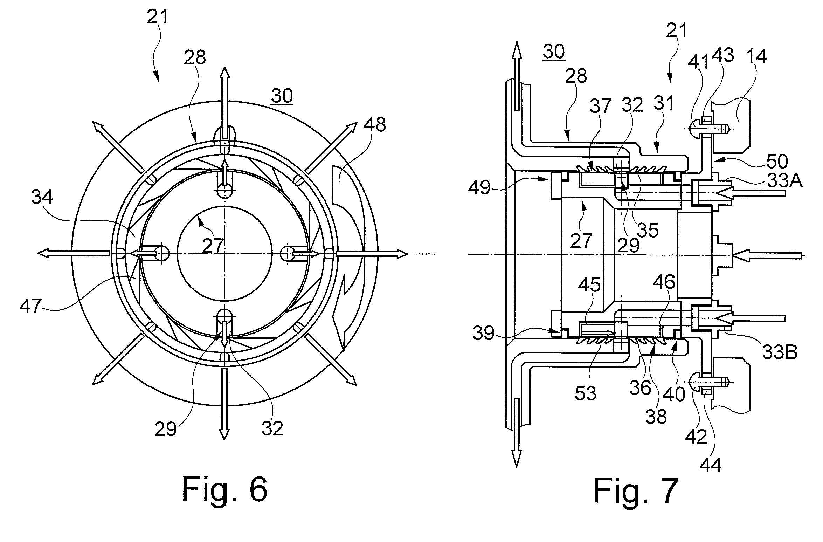

Ein drittes Ausführungsbeispiel der Vorrichtung 21 zeigen Fig. 6 und Fig. 7, deren Wirkungsweise grundsätzlich der zu Fig. 2 und Fig. 3 erläuterten Wirkungsweise der Vorrichtung 21 entspricht. Bei der Ausführung der Vorrichtung 21 gemäß Fig. 6 und Fig. 7 ist das erste Bauteil 27 radial innerhalb des zweiten Bauteils 28 angeordnet, womit das über die Zuführbereiche 33A bis 33D der Schnittstelle 29 zugeführte Hydraulikfluid von innen über die Schnittstelle 29 radial nach außen in die Übertragungsbereiche 34 des zweiten Bauteils 28 geführt wird. Die Gewindebereiche 37 und 38 sind wiederum wie bei der zweiten Ausführung der Vorrichtung 21 gemäß Fig. 4 und Fig. 5 im Bereich des zweiten Bauteils 28 vorgesehen und können in gleichem Umfang wie zu Fig. 2 und Fig. 3 beschrieben auch im Bereich des Bauteiles 27 angeordnet werden.

### Bezugszeichenliste

- 1: Flugtriebwerk
- 2: Bläsereinrichtung
- 3: Kompressorwelle
- 3A bis 3C: Bereich der Kompressorwelle
- 4: Umlaufgetriebe
- 5: Bläserwelle
- 6: Planetensteg, Planetenträger
- 7: Planetenrad
- 7A, B: Zahnbereich des Planetenrads
- 8: Lagereinrichtung
- 9: sphärische Lagereinheit
- 10: weitere Lagereinheit
- 11: Hohlrad
- 11A, B: Zahnbereich des Hohlrads
- 12: Sonnenrad
- 12A, B: Zahnbereich des Sonnenrads
- 13: flexible Verbindungseinrichtung
- 14: Gehäuse
- 15: u-förmiger Bereich der flexiblen Verbindungseinrichtung
- 16: fingerartiger Bereich des Planetensteges
- 17: Innenlagerelement
- 18: Bolzenelement
- 19: sphärisches Koppelelement
- 20: Federring
- 21: Vorrichtung
- 22: Schmier- und Kühlölleitung
- 23: weitere Leitung
- 24: zusätzliche Leitung
- 25, 26: Flanschbereich
- 27: erstes Bauteil
- 28: zweites Bauteil
- 29: Schnittstelle
- 30: Umgebung
- 31: Dichteinrichtung
- 32: Überleitungsbereich
- 33A bis 33D: Zuführbereich
- 34: Übertragungsbereich
- 35: Oberfläche des zweiten Bauteils
- 36: Oberfläche des ersten Bauteils
- 37, 38: Gewindebereich
- 39, 40: weitere Dichteinrichtung
- 41, 42: Bolzenelement
- 43, 44: Langloch
- 45, 46: Rückführbereich
- 47: Schaufelbereich
- 48: Drehrichtung
- 49, 50: Scheibenelement
- 51, 52: Nut
- 53: Strömungsrichtung
- 54, 55: Lagereinheit

## Patentansprüche

1. Vorrichtung (21) mit einem drehfesten ersten Bauteil (27) und einem zumindest bereichsweise mit dem ersten Bauteil (27) drehbar verbundenen zweiten Bauteil (28), wobei Hydraulikfluid über das erste Bauteil (27) und das zweite Bauteil (28) zu Schmierstellen führbar ist, **dadurch gekennzeichnet, dass** das zweite Bauteil (28) mit in im Wesentlichen unter einem definierten Winkel in radialer Richtung im zweiten Bauteil (28) verlaufenden Schaufelbereichen (47) ausgeführt ist, zwischen welchen Übertragungsbereiche (34) für Hydraulikfluid des zweiten Bauteiles (28) vorgesehen sind, deren Strömungsquerschnitte sich in Strömungsrichtung des Hydraulikfluides in den Übertragungsbereichen (34) verringern.

2. Vorrichtung nach Anspruch 1, **dadurch gekennzeichnet, dass** das Hydraulikfluid entgegen der Rotationsrichtung des zweiten Bauteiles (28) in radialer Richtung durch die Übertragungsbereiche (34) führbar ist.

3. Vorrichtung nach Anspruch 1 oder 2, **dadurch gekennzeichnet, dass** eine Schnittstelle (29) zwischen den Bauteilen (27, 28) gegenüber einer Umgebung (30) der Bauteile (27, 28) über eine Dichteinrichtung (31) abgedichtet ist und die Schnittstelle (29) den von sich in radialer Richtung übergreifenden Bereichen der Bauteile (27, 28) begrenzten und im Betrieb Hydraulikfluid führenden Überleitungsbereich (32) umfasst, der sowohl mit Zuführbereichen (33A bis 33D) für Hydraulikfluid des ersten Bauteils (27) als auch mit den Übertragungsbereichen (34) des zweiten Bauteiles (28) in Verbindung steht.

4. Vorrichtung nach Anspruch 3, **dadurch gekennzeichnet, dass** die Schnittstelle (29) einen Hydraulikfluid führenden Bereich einer zumindest schwimmenden hydrodynamischen Lagerung zwischen den Bauteilen (27, 28) bildet.

5. Vorrichtung nach Anspruch 3 oder 4, **dadurch gekennzeichnet, dass** die Dichteinrichtung (31) jeweils im Bereich einer einer Oberfläche (35) des ersten Bauteiles (27) oder des zweiten Bauteiles (28) zugewandten Oberfläche (36) des zweiten Bauteiles (28) oder des ersten Bauteiles (27) mit wenigstens einem Gewindebereich (37, 38) ausgebildet ist.

6. Vorrichtung nach Anspruch 5, **dadurch gekennzeichnet, dass** in zumindest einem dem Gewindebereich (37, 38) nahen Bereich des ersten Bauteils (27) und/oder des zweiten Bauteils ein im Bereich der Schnittstelle (29) mündender Rückführbereich (45, 46) vorgesehen ist, der die Schnittstelle (29) mit einem von der Schnittstelle (29) abgewandten Bereich des Gewindebereichs (37, 38) verbindet.

7. Vorrichtung nach Anspruch 6, **dadurch gekennzeichnet, dass** der Rückführbereich (45, 46) als Kanal oder Bohrung im ersten Bauteil (27) und/oder im zweiten Bauteil ausgebildet ist.

8. Vorrichtung nach einem der Ansprüche 5 bis 7, **dadurch gekennzeichnet, dass** die Steigung und die Höhe eines Gewindegangs des Gewindebereichs (37, 38) mit zunehmendem Abstand von der Schnittstelle (29) ansteigen.

9. Vorrichtung nach einem der Ansprüche 5 bis 8, **dadurch gekennzeichnet, dass** der Überleitungsbereich (32) der Schnittstelle (29) in axialer Erstreckung der Bauteile (27, 28) zwischen wenigstens zwei Gewindebereichen (37, 38) der Dichteinrichtung (31) angeordnet ist.

10. Vorrichtung nach einem der Ansprüche 5 bis 9, **dadurch gekennzeichnet, dass** der Gewindebereich ein mehrgängiges Gewinde aufweist.

11. Vorrichtung nach einem der Ansprüche 3 bis 10, **dadurch gekennzeichnet, dass** der den Überleitungsbereich (32) der Schnittstelle (29) begrenzende Bereich des ersten Bauteils (27) innerhalb des den Überleitungsbereich (32) der Schnittstelle (29) mitbegrenzenden Bereichs des zweiten Bauteils (28) angeordnet ist, oder der Bereich des zweiten Bauteils (28) innerhalb des Bereichs des ersten Bauteils (27) angeordnet ist.

12. Vorrichtung nach einem der Ansprüche 1 bis 11, **dadurch gekennzeichnet, dass** das erste Bauteil (27) über Bolzenelemente (41, 42) gegen Verdrehen in Langlöchern (43, 44) gehalten ist.

13. Vorrichtung nach einem der Ansprüche 3 bis 12, **dadurch gekennzeichnet, dass** das Hydraulikfluid über das erste Bauteil (27) und die Schnittstelle (29) radial von innen nach außen oder von außen nach innen in das zweite Bauteil (28) hinein führbar ist.

14. Vorrichtung nach einem der Ansprüche 3 bis 13, **dadurch gekennzeichnet, dass** mehrere über den Umfang des ersten Bauteils (27) symmetrisch verteilt angeordnete Ölzuführbereiche (33A bis 33D) vorgesehen sind.

15. Vorrichtung nach einem der Ansprüche 3 bis 14, **dadurch gekennzeichnet, dass** auf der der Schnittstelle (29) abgewandten Seite des Gewindebereichs (37, 38) eine weitere vorzugsweise einen Dichtring umfassende Dichteinrichtung (39, 40) vorgesehen ist.
